# EUROPEAN PATENT APPLICATION

(11) **EP 1 918 646 A1**
(43) Date of publication of application: **07.05.2008**
(21) Application number: 06425748.8
(22) Date of filing: 30.10.2006
(51) Int. Cl.: F24C 15/20, B01D 46/08

(54) **Functional structure for extractor hoods**

(71) Applicant: Elica S.P.A., 60044 Fabriano (Ancona) (IT)
(72) Inventor: Casoli, Francesco, 60044 Fabriano (Ancona) (IT)
(74) Representative: Ghioni, Carlo Raoul Maria

(57) **Abstract**

A functional structure (1) for extractor hoods comprises a hollow casing (2) which houses a filtering element (3) and soundproofing means (4). Power-driven extractor means (5) are operatively interconnected with the structure (1). The filtering element (3) has a hollow, three-dimensional form (7), is located in the casing (2) and is oriented in such a way as to direct a free inlet opening (6) directed towards the outside of the casing (2) itself.

## Description

This invention relates to a functional structure for extractor hoods.

One of the features of modem extractor hoods for home kitchens that is in increasing demand is silent operation and manufacturers are investing more and more resources in research aimed at achieving it. Indeed, extractor hoods, being self-contained domestic appliances installed in the home and considering that they are equipped with motors and filtering units through which air passes at high speed, are a source of considerable noise, especially when they operate at medium and high speeds.

In prior art hoods, one of the critical factors for the intensity of noise emissions is the structure of the filter.

In practically all cases, the filter has a flat, essentially two-dimensional form and is located at the bottom of the hood.

To reduce acoustic emission, it is common practice to use sound absorbing material, distributed in varying quantities to line the inside of the hood between the filter and the motor; alternatively, insulating panels are placed in front of the filter to damp the noise made by the air passing through the filter.

Also known in prior art are special functional hood structures basically comprising a parallelepiped-shaped casing enclosing all the above mentioned parts.

These functional hood structures are modular, self-contained and complete structures covered by exterior panelling of different kinds and in various combinations to create different hood designs and models.

In one prior art solution in the name of the same applicant as this invention, the functional structure is equipped with a filtering element fronted by a flat panel made of sound absorbing material designed to reduce noise.

This functional structure is then covered by external decorative panels to create different panel designs.

The main disadvantage of this type of functional structure lies in the fact that a finished hood of compact size can only be obtained by using a relatively small parallelepiped-shaped functional structure. This, however, is clearly in contrast with the well proven theory that the smaller the size the greater the acoustic emissions and vice versa.

In other words, the intensity of acoustic emissions is inversely proportional to the size of the functional structure.

For this reason, prior art extractor hoods that are silent tend to be quite large whilst hoods of relatively limited size are quite noisy.

The aim of this invention is to overcome the above mentioned disadvantages by providing a functional structure that is at once compact in size and silent in operation.

To achieve this aim, the invention proposes a filter with a hollow three-dimensional form and, in particular, a cylindrical form, and which, s tarting from the air intake section, extends towards the inside of the functional structure with a free inlet opening directed towards the outside of the functional structure itself. Advantageously, the filter may also be equipped with an air intake nozzle having a profile adapted to control the air inflow before it goes through the filter.

The technical characteristics of the invention, with reference to the above aim, can be easily inferred from the appended claims, in particular claim 1, and also from any of the claims that depend, whether directly or indirectly, on claim 1.

The advantages of the invention are apparent from the detailed description which follows, with reference to the accompanying drawings which illustrate preferred embodiments of the invention provided merely by way of example and without restricting the scope of the inventive concept, and in which:
- Figure 1 is a cross section showing a functional structure, according to the invention, in its entirety;
- Figure 2 is a perspective, exploded view of a functional structure according to the invention;
- Figures 3 to 8 are perspective views of non-restricting embodiments of three-dimensional filters that may be used for the invention.

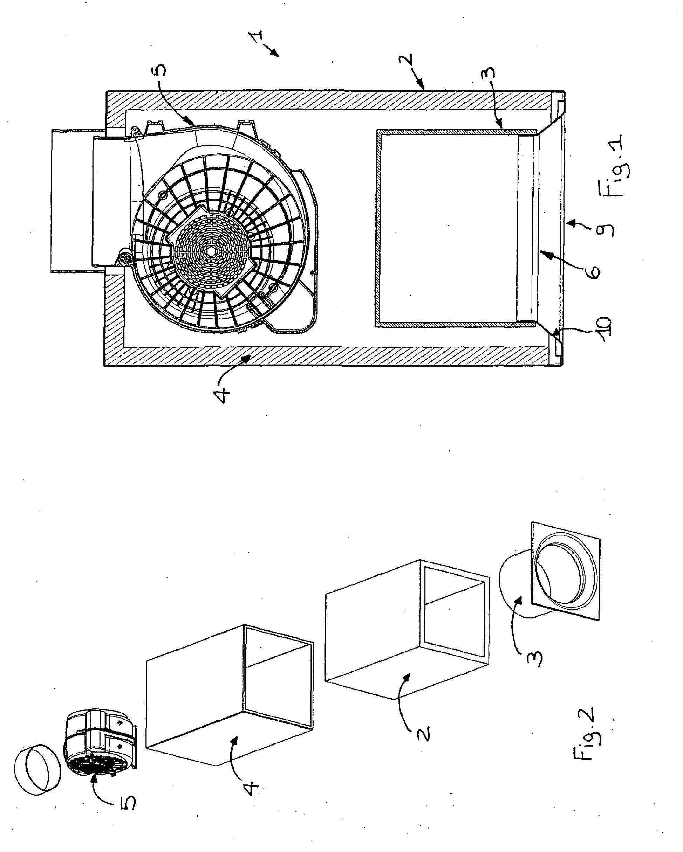

With reference to the accompanying drawings, the numeral 1 in Figure 1 denotes in its entirety a functional structure used for extractor hoods and essentially comprising: a hollow casing 2 which houses a filtering element 3, soundproofing means 4 and power-driven extractor means 5. The extractor means 5 are not, however, necessarily located in this position and might be substituted by a self-contained extraction unit installed outside the functional structure 1 and operatively connected to the latter by suitable conduits.

The functional structure 1 can be used as is or as the main component for the construction of a generic extractor hood. Thus, the main structure performs the separate functions of extracting, filtering and expelling and/or recirculating the air and, at the same time, of mounting decorative elements which cover at least part of the structure 1 itself which can be combined in different ways to create different hood designs.

The filtering element 3 has a hollow, three-dimensional form 7 and is located entirely inside the casing 2. The filtering element 3 also has a free inlet opening 6 directed towards the outside of the casing 2.

The free inlet opening 6 through which the air is sucked in by the hood therefore forms an integral part of the filtering element 3. This fact, combined with the hollow, three-dimensional form 7 improves the air flow channelled into the filtering element 3, thereby reducing noise.

The filtering element 3 is housed in the casing 2 preferably in a position substantially coaxial with the casing 2 and usually, but not necessarily, close to an air intake section 9.

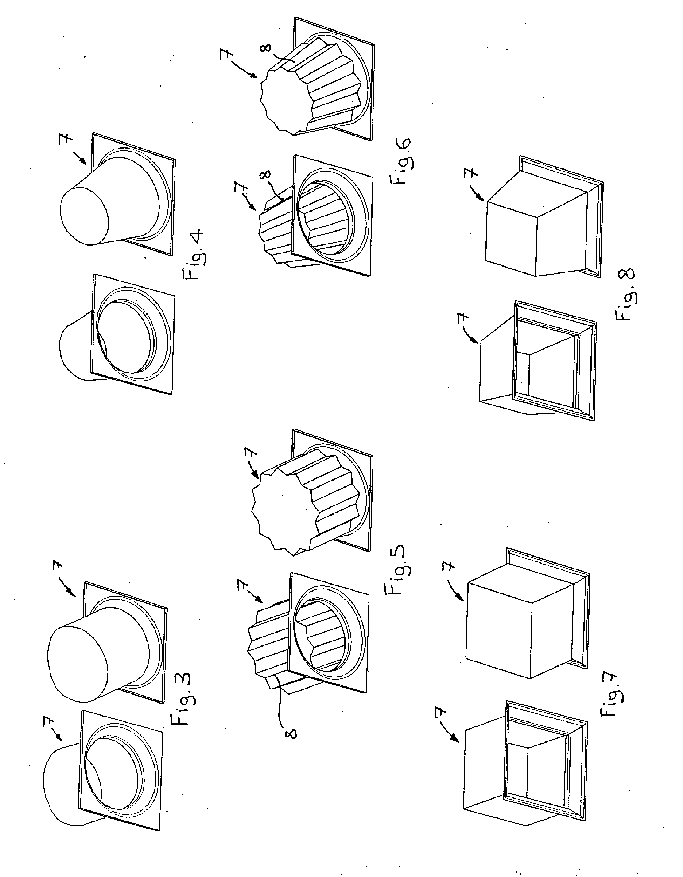

Preferably, the three-dimensional form 7 is axisymmetric. Some embodiments of the form 7 are illustrated in Figures 3 to 6.

More specifically, Figures 3 and 4 illustrate a first, three-dimensional cylindrical form 7 and a three-dimensional, truncated cone shaped form 7, respectively.

Figures 5 and 6 show two variations of the substantially cylindrical and truncated cone shaped forms having boundary surfaces 8 that are polyhedrally corrugated in such a way as to create a larger filtering surface without significantly changing the overall size of the filtering element 3.

In yet other embodiments of the filtering element 3, illustrated in Figures 7 and 8, the three-dimensional form 7 has the shape of a parallelepiped or of a truncated pyramid.

It should be noticed that wisely choosing the combinations of three-dimensional forms 7 and casings 2 makes it possible to control the reverberation/damping of the noise created by the air flowing through the filtering element 3.

The type of material the filtering element is made of also plays an important role in this regard. Although the material is preferably metal, for example, suitably perforated metal sheeting, noise emission might also be controlled using plastic, paper and/or other kinds of material.

Preferably, the filtering element 3 also comprises a nozzle 10 built into the filtering element 3 itself and directed towards the outside of the functional structure 1. The nozzle 1 0 may be made as a single part with the filtering element 3 and therefore made of the same material; or it may be made as a distinct component, separate from the filtering element 3 (and, if necessary, also made of a different material) to which it can be fitted to create a single operating assembly.

The nozzle 10 makes it possible to guide the flow of air sucked in by the functional structure 1, optimizing its fluid dynamic properties before it flows through the filtering element 3.

Thus, the nozzle 10 not only reduces noise emission significantly but can also improve the performance of the filtering element 3.

The nozzle 10 is applied to the free inlet opening 6 and may form an integral part of the free inlet opening 6. However, if the performance of the functional structure 1 is found to be fully satisfactory without the nozzle 10, then the latter may be dispensed with altogether.

As to the soundproofing means 4, Figures 1 and 2 show how the means 4 can be distributed uniformly on the inside surface of the casing 2 in the form of a layer of sound absorbing material, preferably melamine.

As may be evinced from Figure 1, thanks to the shape of the filtering element 3 and its position in the casing 2, the soundproofing material can be distributed evenly in the parallelepiped shaped structure 1 over practically all the inside surface of the casing 2, and thus, since the filtering element 3 is practically fully surrounded by the soundproofing material, contributing significantly to reducing the noise emitted by the casing 2 as a result of the air flowing through the filtering element 3.

In practice, thanks to the solution according to the invention, sound emission is no longer linked directly to the size of the functional structure 1 and can be controlled independently of the latter's dimensions. This, on the one hand, enhances noise reduction capabilities and, on the other, enables the functional structure 1 which houses the source of the noise to be limited in size. This in turn means that even after the decorative panels have been fitted, the finished extractor hoods may be relatively small in size.

The three-dimensional structure of the filtering element 3 and its functional interaction with the shape of the functional structure 1 of the hood enables the soundproof lining to cover the entire inside surface of the functional structure 1 without practically any obstacles. Soundproofing is thus greatly improved and noise levels much lower than those of similar prior art structures.

The functional structure made in this way advantageously combines reduced size and low noise emission in a single unit. The dimensional compactness of this unit means that the structure can be fitted with external decorative panelling in a wide variety of shapes and sizes without excessively increasing its dimensions and, what is more, without disadvantages in terms of soundproofing capability.

Initial tests have already shown that the solution according to the invention offers extremely advantageous noise reducing performance. Indeed, at both medium and high speeds, with variations in the processed air flow rate, the sound emission is so low that it is almost impossible to hear whether the hood is on or off.

It will be understood that the invention described, useful in many industrial applications, may be modified and adapted in several ways without thereby departing from the scope of the inventive concept and that all the details of the invention may be substituted by technically equivalent elements.

## Claims

1. A functional structure for extractor hoods comprising a hollow casing (2), with a filtering element (3) and soundproofing means (4) housed inside the casing (2), the structure (1) comprising power-driven extractor means (5) operatively associated with the functional structure (1); said structure (1) being **characterised in that** the filtering element (3) has a hollow, three-dimensional form (7), is located inside the casing (2) and comprises a free inlet opening (6) directed towards the outside of the casing (2).

2. The structure according to claim 1, **characterised in that** the filtering element (3) is made at least partly of intrinsically filtering material.

3. The structure according to claim 1, **characterised in that** the extractor means (5) are housed in the casing (2).

4. The structure according to claim 1, **characterised in that** the extractor means (5) are located at a position remote from the structure (1) to which they are connected by a suitable conduit.

5. The structure according to claim 1, **characterised in that** the three-dimensional form (7) is axisymmetric.

6. The structure according to one of the foregoing claims, **characterised in that** the three-dimensional form (7) has the shape of a cylinder, a parallelepiped, a truncated cone or a truncated pyramid.

7. The structure according to claim 6, **characterised in that** the three-dimensional form (7) has a corrugated boundary surface (8).

8. The structure according to claim 7, **characterised in that** the boundary surface (8) is polyhedrally corrugated.

9. The structure according to claim 6 or 7 or 8, **characterised in that** the three-dimensional form (7) is made of metal.

10. The structure according to one of the foregoing claims, **characterised in that** it comprises a nozzle (10) associated with the filtering element (3).

11. The structure according to claim 10, **characterised in that** the nozzle (10) and the filtering element (3) are mutually integrated in a single part.

12. The structure according to claim 10, **characterised in that** the nozzle (10) and the filtering element (3) are made as separate parts fitted together to form a single assembly.

13. The structure according to one of the foregoing claims, **characterised in that** the soundproofing eans (4) include sound absorbing material positioned on the inside surface of the casing (2).

14. The structure according to claim 13, **characterised in that** the soundproofing means (4) include sound absorbing material distributed uniformly on the inside surface of the casing (2).

15. The structure according to claim 13, **characterised in that** the sound absorbing material is melamine.

16. The structure according to claim 13, **characterised in that** the casing (2) has the shape of a parallelepiped.

17. The structure according to claim 13, **characterised in that** the casing (2) has the shape of a cylinder.

18. The structure according to claim 13, **characterised in that** the casing (2) oval has an oval shape.

19. An extractor hood **characterised in that** it comprises a functional structure (1) according to any of the foregoing claims.

20. The extractor hood according to claim 19 **characterised in that** the functional structure (1) is designed to be fitted with external decorative elements that cover at least part of the structure (1) itself.
